# FASCICULE DE BREVET EUROPEEN

(11) **EP 4 433 367 B1**
(45) Date de publication et mention de la délivrance du brevet: **14.01.2026**
(21) Numéro de dépôt: 22818300.0
(22) Date de dépôt: 15.11.2022
(51) Int. Cl.: B64D 11/06, B64D 11/00

(54) **DISPOSITIF DE FERMETURE AMOVIBLE D'UN ESPACE, NOTAMMENT POUR UNE CABINE D'AVION**
ABNEHMBARE VERSCHLUSSVORRICHTUNG ZUM VERSCHLIESSEN EINES RAUMES, INSBESONDERE EINER FLUGZEUGKABINE
REMOVABLE CLOSURE DEVICE FOR CLOSING OFF A SPACE, IN PARTICULAR FOR AN AIRCRAFT CABIN

(30) Priorité: 17.11.2021 FR 2112124
(43) Date de publication de la demande: 25.09.2024
(73) Titulaire: Safran Seats, 78370 Plaisir (FR); ID-Product, 31100 Toulouse (FR)
(72) Inventeur: BONNEFOY, Bastien, 77550 Moissy-Cramayel (FR); CANS, Benjamin, 31100 TOULOUSE (FR)
(74) Mandataire: Marconnet, Sébastien
(86) Numéro de dépôt international: PCT/EP2022/082032
(87) Numéro de publication internationale: WO 2023/088915

(56) Documents cités:
- WO-A1-2020/126696
- FR-A1- 2 738 591
- GB-A- 2 576 505
- US-A- 5 659 999
- US-A1- 2019 383 062
- US-A1- 2021 221 516

## Description

La présente invention porte sur une unité de siège, notamment pour une cabine d'avion, comportant un dispositif de fermeture amovible d'un espace. L'invention trouve une application particulièrement avantageuse avec les cabines d'avion équipées d'unités de sièges de type "classe affaires" et "première classe".

De façon connue en soi, une telle unité de siège comporte un siège associé à une console latérale et à une coque d'intimité s'étendant au moins en partie autour du siège.

Le siège offre au passager différentes positions de confort, d'une position "assise" jusqu'à une position "allongée", dans laquelle le siège définit un plan de couchage sensiblement horizontal pour que le passager puisse s'allonger. Des positions intermédiaires de confort sont aussi proposées, telles que la position "relax" dans laquelle un dossier du siège est fortement incliné. Généralement, ces positions intermédiaires sont obtenues par l'inclinaison du dossier pivotant autour d'un axe horizontal et perpendiculaire à un axe d'extension du siège. Le passager peut rester sur le siège lors de transitions entre les différentes positions. Le siège est généralement constitué notamment du dossier et d'une assise et est susceptible de comprendre un repose-jambes et/ou un repose-pieds, pouvant être fixes ou liés à une cinématique du siège.

Certains agencements de sièges pour cabine d'avion de type "Classe Affaires" permettent un accès direct à un couloir de circulation pour tous les passagers, via un passage disposé entre deux sièges agencés l'un derrière l'autre selon un axe longitudinal de la cabine de l'avion.

Afin de garantir l'intimité du passager, il est possible de prévoir une paroi de séparation amovible pouvant sélectivement obturer ou laisser libre le passage d'accès à un couloir de circulation. Par exemple, le document FR3078946 décrit un dispositif de séparation comportant un enrouleur autour duquel un rideau flexible est enroulé en position stockée. Lorsque le rideau flexible est déroulé, il est possible de créer avec la coque d'intimité, un espace clos ou semi-clos autour de l'unité de siège. Toutefois, l'enrouleur présente une masse et un encombrement importants. L'intégration de l'enrouleur sur l'unité de siège a donc pour effet de réduire l'espace de vie du passager.

Le document GB2576505 décrit un ensemble coulissant comprenant une base ayant une gorge, et une structure coulissante pouvant coulisser le long de la gorge. Une bande de matériau souple est fixée à un enrouleur et à la structure coulissante, la rotation de l'enrouleur dans un premier sens entraînant l'enroulement de la bande autour de l'enrouleur, et la rotation dudit enrouleur dans un deuxième sens provoque le déroulement de la bande de l'enrouleur.

Le document US2019/383062 décrit un système d'issue de secours comprenant un premier cadre de structure primaire, un second cadre de structure primaire s'étendant sensiblement parallèlement au premier cadre de structure primaire, une ouverture de porte agencée entre le premier cadre de structure primaire et le second cadre de structure primaire, et une porte déplaçable sensiblement parallèlement au premier cadre de structure primaire et au second cadre de structure primaire entre une position fermée et une position ouverte.

Le document US2021/221516 décrit un dispositif amovible de fermeture d'un espace intérieur d'un aéronef. Le dispositif comporte un cadre comprenant au moins un montant, un ensemble à rideau comprenant un rideau flexible, et au moins un dispositif de guidage pour assurer un guidage en translation du rideau souple par rapport au montant.

Le document US5659999 décrit un dispositif de fermeture d'un espace se composant de panneaux fixes et coulissants soutenus dans un cadre rectangulaire défini par des éléments verticaux et horizontaux. Les panneaux sont eux-mêmes formés par des cadres périphériques rectangulaires à membrures horizontales et verticales. Un câble de rappel est relié à un élément vertical du panneau coulissant et passe autour d'une poulie montée sur l'élément vertical opposé du panneau fixe.

Le document FR2738591 décrit un dispositif de fermeture d'un espace se composant de panneaux fixes et coulissants soutenus dans un cadre rectangulaire défini par des éléments verticaux et horizontaux. Les panneaux sont eux-mêmes formés par des cadres périphériques rectangulaires à membrures horizontales et verticales. Un câble de rappel est relié à un élément vertical du panneau coulissant et passe autour d'une poulie montée sur l'élément vertical opposé du panneau fixe.

L'invention vise notamment à remédier efficacement à cet inconvénient en proposant une unité de siège, notamment pour une cabine d'avion, comportant un dispositif de fermeture amovible d'un espace comportant:
- un châssis comportant un logement, et
- une porte mobile apte à se déplacer en translation par rapport au châssis entre une position stockée dans laquelle la porte mobile est située majoritairement à l'intérieur du logement et une position déployée dans laquelle la porte mobile est située majoritairement à l'extérieur du logement,
- ledit dispositif de fermeture amovible comportant en outre un système de rappel comportant une bobine à câble autour de laquelle est enroulé un câble, ledit câble étant relié par une de ses extrémités à la porte mobile, et
- un système à ressort configuré pour emmagasiner une énergie mécanique lorsque le câble est dans un état déroulé suite à un déplacement de porte vers la position déployée, et
- pour libérer cette énergie mécanique de façon à faire repasser automatiquement la porte mobile de la position déployée vers la position stockée suite à un relâchement de la porte mobile,
- le système à ressort comportant une bobine à ressort autour de laquelle est enroulée au moins en partie une lame ressort,
- ladite lame ressort étant également reliée à la bobine à câble,
- ladite bobine à câble comportant une portion autour de laquelle le câble est enroulé et une portion axialement adjacente autour de laquelle une portion de la lame ressort peut être enroulée lors d'un stockage d'énergie mécanique.

L'invention permet ainsi, grâce au système à câble, d'obtenir un gain de masse, de coût, et d'encombrement augmentant l'espace de vie du passager. L'invention présente en outre un caractère sécuritaire dans la mesure où le système de rappel permet de rentrer la porte automatiquement par défaut en position stockée en cas d'évacuation d'urgence.

Selon une réalisation de l'invention, la bobine à câble est liée en rotation avec un pignon engrenant avec un pignon réducteur.

Selon une réalisation de l'invention, le pignon réducteur est accouplé avec un pignon amortisseur pour contrôler une vitesse de retour de la porte mobile en position stockée.

Selon une réalisation de l'invention, la porte mobile comporte une roue dentée en prise avec une crémaillère fixée sur le châssis.

Selon une réalisation de l'invention, ledit dispositif de fermeture amovible comporte un dispositif de verrouillage et de déverrouillage de la porte mobile en position stockée.

Selon une réalisation de l'invention, le dispositif de verrouillage et de déverrouillage comporte une poignée destinée à coopérer avec une contreforme ménagée dans le châssis.

Selon une réalisation de l'invention, le dispositif de verrouillage et de déverrouillage comporte un loquet rotatif muni d'une portion en saillie, ladite portion en saillie étant destinée à venir s'insérer à l'intérieur d'un logement correspondant ménagé dans la poignée lorsque le dispositif est dans un état verrouillé.

Selon une réalisation de l'invention, la poignée comporte un bouton apte à faire basculer le loquet de façon à désengager la portion en saillie par rapport au logement pour faire passer le dispositif dans un état déverrouillé.

Selon une réalisation de l'invention, ledit dispositif de fermeture amovible comporte un dispositif de maintien de la porte en position déployée.

Selon une réalisation de l'invention, le dispositif de maintien de la porte est un dispositif magnétique.

Selon une réalisation de l'invention, des aimants disposés sur un montant structurel de la porte et/ou sur la poignée sont destinés à coopérer avec des éléments magnétiques intégrés sur une unité de siège avant.

Selon une réalisation de l'invention, ledit dispositif de fermeture amovible comporte au moins une liaison glissière interposée entre la porte et le châssis.

Selon une réalisation de l'invention, le châssis comporte une cavité ménagée dans un panneau de façon à augmenter un espace de vie au niveau des épaules d'un passager.

Selon une réalisation de l'invention, la porte mobile comporte un panneau réalisé dans un matériau souple et deux panneaux de finition disposés de part et d'autre du panneau souple.

L'invention concerne en outre une cabine d'avion comportant un couloir de circulation, au moins une unité de siège munie d'un dispositif de fermeture amovible tel que précédemment défini apte à sélectivement obturer ou laisser libre un passage d'accès au couloir de circulation.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentées à titre d'exemples non limitatifs, qui pourront servir à compléter la compréhension de la présente invention et l'exposé de sa réalisation et, le cas échéant, contribuer à sa définition:
[Fig. 1a] [Fig. 1b] Les figures 1a et 1b sont des vues en perspective d'une unité de siège munie d'un dispositif de fermeture amovible d'un espace selon l'invention respectivement en position stockée et en position déployée;
[Fig. 2a] [Fig. 2b] Les figures 2a et 2b sont des vues en perspective d'un dispositif de fermeture amovible d'un espace selon l'invention respectivement en position stockée et en position déployée;
[Fig. 3] La figure 3 est une vue du dispositif de fermeture selon l'invention montrant l'implantation de dispositifs de rappel de la porte au niveau des extrémités haute et basse d'un châssis;
[Fig. 4] La figure 4 est une vue en perspective détaillée d'une portion du châssis comportant un système de rappel de la porte en position stockée;
[Fig. 5a] [Fig. 5b] Les figures 5a et 5b sont respectivement des vues en perspective et en coupe d'un système de rappel de la porte mobile selon l'invention;
[Fig. 6] La figure 6 est une vue en perspective détaillée du dispositif à crémaillère permettant de contrôler une vitesse de la porte mobile selon l'invention;
[Fig. 7] La figure 7 est une vue en perspective détaillée d'une poignée intégrant un dispositif de verrouillage et de déverrouillage de la porte mobile en position stockée;
[Fig. 8a] [Fig. 8b] [Fig. 8c] Les figures 8a à 8c illustrent les étapes de déverrouillage de la poignée du dispositif de fermeture d'un espace selon l'invention;
[Fig. 9] La figure 9 est une vue en perspective détaillée d'une zone de contact magnétique entre un montant structurel de la porte et une portion d'un meuble d'une unité de siège avant permettant de maintenir par attraction magnétique la porte mobile en position déployée;
[Fig. 10] La figure 10 est une vue en perspective détaillée d'un montant structurel de la porte d'un dispositif de fermeture selon l'invention comportant une pluralité d'aimants pour assurer le maintien magnétique de la porte en position déployée;
[Fig. 11] La figure 11 est une vue en perspective d'une cabine d'avion comportant une pluralité d'unités de sièges comprenant chacune un dispositif de fermeture amovible d'un passage d'accès vers un couloir de circulation.

Il est à noter que les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

Par ailleurs, dans la suite de la description, les termes relatifs du type "horizontal" ou "vertical" sont entendus par référence au sens commun que leur donnerait un passager assis sur un siège auquel est associé un dispositif de fermeture amovible d'un espace selon l'invention.

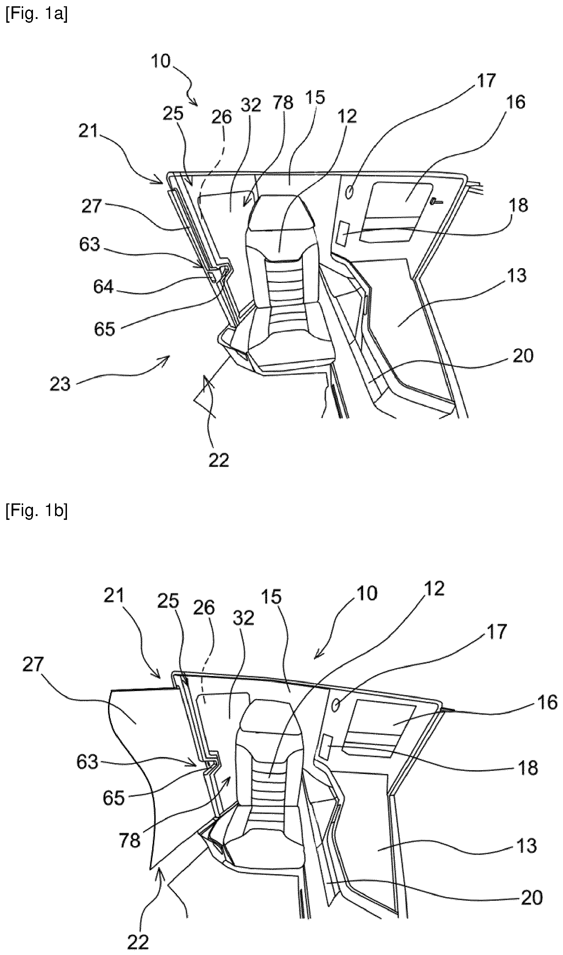

Les figures 1a et 1b montrent une unité de siège 10 comportant au moins un siège 12 associé à une console latérale 13 s'étendant suivant un côté du siège 12. Une coque 15 s'étend au moins en partie autour du siège 12 de manière à délimiter un espace semi-clos autour du passager. Une telle configuration permet de garantir l'intimité du passager assis sur le siège 12. Un écran vidéo d'un système multimédia ou IFE (pour "Inflight Entertainment System" en anglais) pourra être implanté sur une partie arrière de la coque d'intimité 15.

Du côté de l'extrémité arrière de la console 13, on pourra prévoir un espace de stockage 16 comportant un ou plusieurs éléments parmi une pochette littérature, un porte-bouteille, ou un minibar. Le choix des rangements est configurable en fonction du souhait de la compagnie aérienne.

La console 13 pourra également comporter une liseuse 17 ainsi qu'une unité de contrôle 18 du siège et de son environnement (dite "PCU" pour "Passenger Control Unit" en anglais). L'unité de contrôle 18 permet notamment au passager de commander la sélection d'une position du siège ainsi que des organes de l'environnement du siège 12, tels qu'un système vidéo, un dispositif de chauffage, un dispositif de création d'ambiance lumineuse, ou tout autre organe de l'environnement du siège.

L'unité de siège 10 pourra également comporter classiquement une tablette repas 20 mobile entre une position stockée (correspondant à celle représentée sur les figures 1a et 1b) dans laquelle la tablette repas 20 se trouve à l'intérieur d'un logement ménagé dans la console 13 et une position déployée dans laquelle la tablette repas 20 se situe à l'extérieur du logement.

Le siège 12 est avantageusement pourvu d'une cinématique lui permettant d'être mobile entre une position "assise" dans laquelle le siège 12 est configuré pour définir une position assise d'un passager, et une position "allongée" dans laquelle le siège 12 est configuré pour définir une surface de couchage du passager, avantageusement sensiblement horizontale. Des positions intermédiaires de confort sont aussi proposées, telles que la position "relax" dans laquelle un dossier du siège 12 est fortement incliné. Généralement, ces positions intermédiaires sont obtenues par l'inclinaison du dossier pivotant autour d'un axe horizontal et perpendiculaire à un axe d'extension du siège. Le passager peut rester sur le siège lors de transitions entre les différentes positions.

Un dispositif de fermeture amovible 21 permet de sélectivement obturer un passage d'accès 22 vers un couloir de circulation 23 d'un avion pour conférer une intimité au passager ou libérer ce passage d'accès 22 dans le cas où le passager souhaite pouvoir sortir de son siège 12. Le passage d'accès 22 s'étend entre l'unité de siège 10 et une coque d'intimité 15 d'une unité de siège 10 avant.

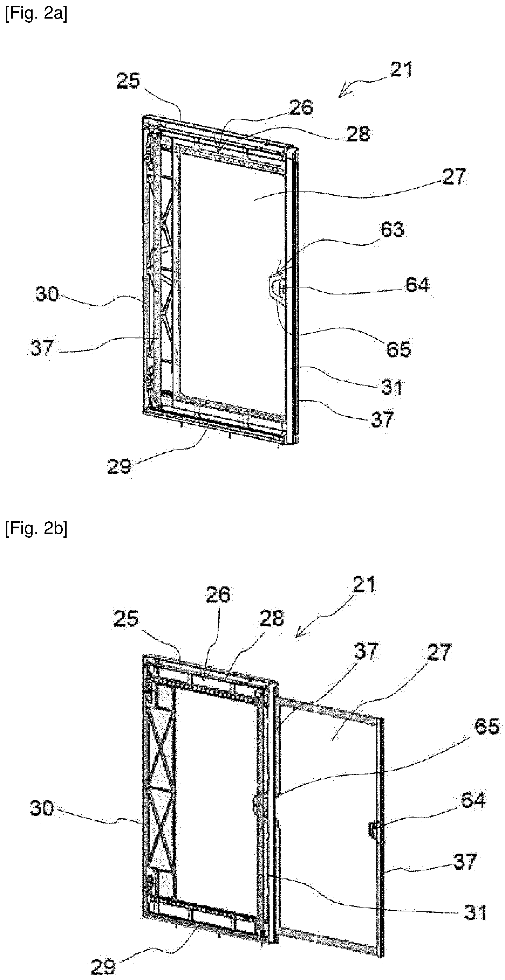

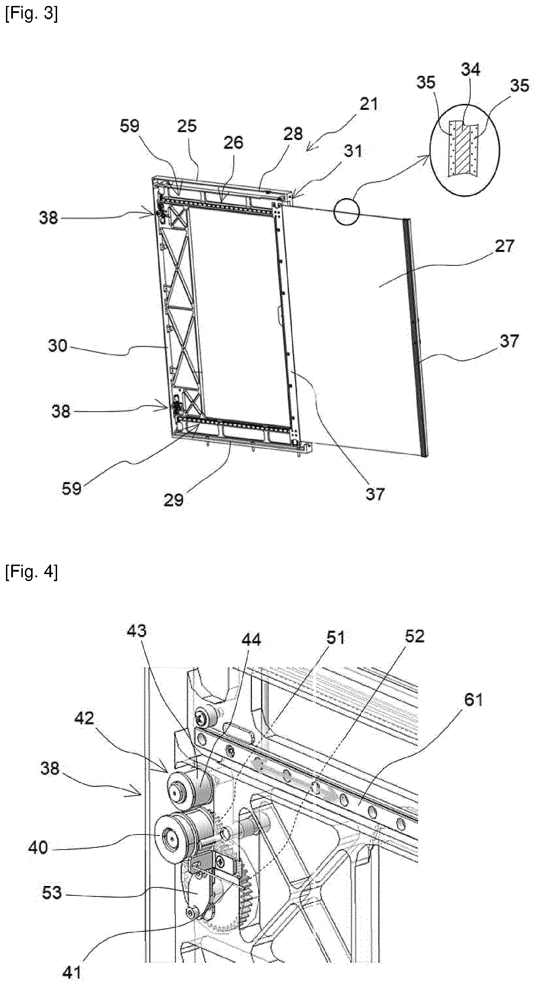

Plus précisément, comme on peut le voir sur les figures 2a, 2b, et 3, le dispositif de fermeture amovible 21 comporte un châssis 25 comprenant un logement 26. Une porte mobile 27 est apte à se déplacer en translation par rapport au châssis 25 entre une position stockée dans laquelle la porte 27 est située majoritairement à l'intérieur du logement 26 (cf. figures 1a et 2a) et une position déployée dans laquelle la porte 27 est située majoritairement à l'extérieur du logement 26 (cf. figure 1b et 2b). En l'occurrence, le déplacement de la porte 27 est effectué suivante une direction horizontale. En variante, le déplacement de la porte 27 est effectué suivant une direction verticale.

Comme on peut le voir notamment sur la figure 3, le châssis 25 comporte une structure formée par un bord supérieur 28, un bord inférieur 29, et deux bords latéraux 30, 31 reliant mécaniquement entre eux le bord supérieur 28 et le bord inférieur 29. La structure du châssis 25 pourra être recouverte de panneaux de finition 32 visibles sur les figures 1a et 1b.

Comme on peut le voir sur la figure 3, la porte mobile 27 comporte un panneau 34 réalisé dans un matériau souple, tel que du tissu. Deux panneaux de finition 35 pourront être disposés de part et d'autre du panneau souple 34 de façon à former une structure empilée de type "sandwich". Les panneaux de finition 35 pourront être réalisés dans un matériau plastique. Les panneaux de finition 35 pourront comporter des motifs personnalisables par la compagnie aérienne.

Un montant structurel 37 d'orientation verticale est disposé à chaque extrémité du panneau 34. Les montants structurels 37 sont réalisés dans un matériau rigide, par exemple en métal ou dans un matériau plastique rigide. Comme cela est expliqué plus en détails ci-après, les montants structurels 37 sont destinés à porter des composants fonctionnels de la porte 27. De préférence, afin de limiter son poids, la porte 27 est dépourvue d'élément structurel s'étendant entre les montants d'extrémité 37. En variante, la porte 27 pourrait toutefois comporter un cadre auquel le panneau flexible 34 est relié par des moyens amovibles, tels que des attaches auto-agrippantes ou des boutons pressions ou tout autre dispositif adapté à l'application, de façon à pouvoir désolidariser aisément le panneau flexible 34 par rapport au cadre en cas d'évacuation d'urgence.

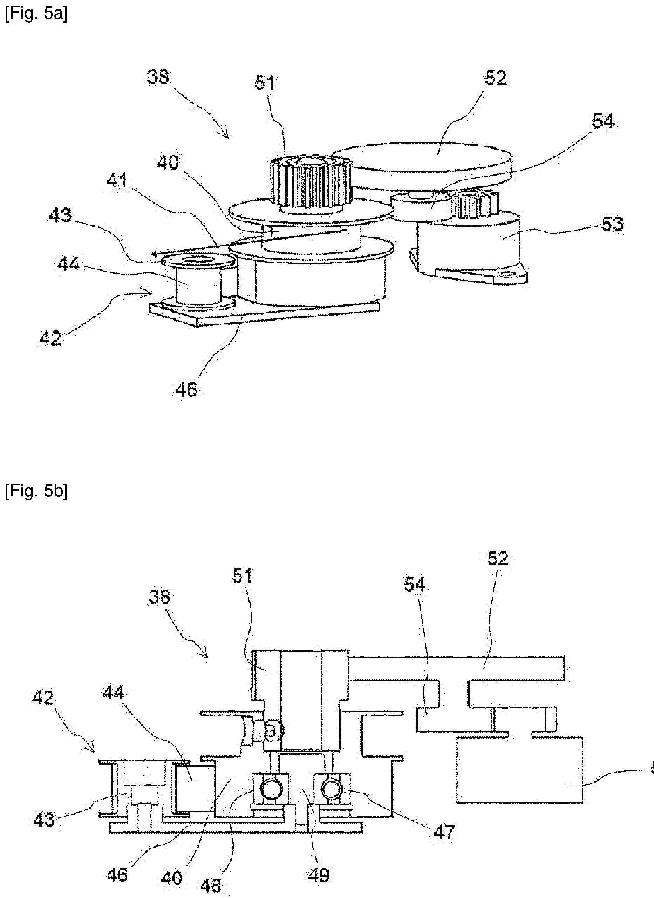

Par ailleurs, comme on peut le voir sur les figures 4, 5a, et 5b, un système de rappel 38 comporte une bobine à câble 40 autour de laquelle est enroulé un câble 41. Le câble 41 est relié par une de ses extrémités à la porte mobile 27. En outre, un système à ressort 42 est configuré pour emmagasiner une énergie mécanique lorsque le câble 41 est dans un état déroulé suite à un déplacement de la porte 27 vers la position déployée, et pour libérer cette énergie mécanique de façon à faire repasser automatiquement la porte 27 de la position déployée vers la position stockée suite à un relâchement de la porte mobile 27.

Dans l'exemple représenté, le système à ressort 42 comporte une bobine à ressort 43 autour de laquelle est enroulé au moins en partie une lame ressort 44. La lame ressort 44 est également reliée à la bobine à câble 40. La lame ressort 44 est par exemple constituée par une bande de métal allongée enroulée au moins en partie autour de la bobine à ressort 43 et connectée à la bobine à câble 40. Ainsi, lorsque la porte 27 passe de la position stockée à la position déployée, l'énergie mécanique est stockée par enroulement de la lame ressort 44 autour de la bobine à câble 40. En variante, le système à ressort 42 pourra être constitué par un ressort de torsion implanté au niveau de l'axe de la bobine à câble 40 ou tout autre dispositif adapté à l'application.

La bobine à câble 40 comporte ainsi une portion autour de laquelle le câble 41 est enroulé et une portion axialement adjacente autour de laquelle une portion de la lame ressort 44 peut être enroulée lors d'un stockage d'énergie mécanique.

La bobine à câble 40 et la bobine à ressort 43 sont deux bobines distinctes ayant des axes distincts parallèles entre eux. La bobine à câble 40 et la bobine à ressort 43 pourront être montées sur une plaquette de support 46 destinée à être fixée sur le châssis 25. Un roulement 47 est disposé dans un logement interne 48 de la bobine à câble 40. Le roulement 47 est monté sur une vis à épaulement 49 fixée sur la plaquette de support 46.

Afin de contrôler la vitesse de retour de la porte 27 en position stockée, la bobine à câble 40 est liée en rotation avec un pignon 51 engrenant avec un pignon réducteur 52. Le pignon réducteur 52 est accouplé avec un pignon amortisseur 53. A cet effet, le pignon amortisseur 53 pourra engrener avec une roue dentée 54 liée en rotation avec le pignon réducteur 52.

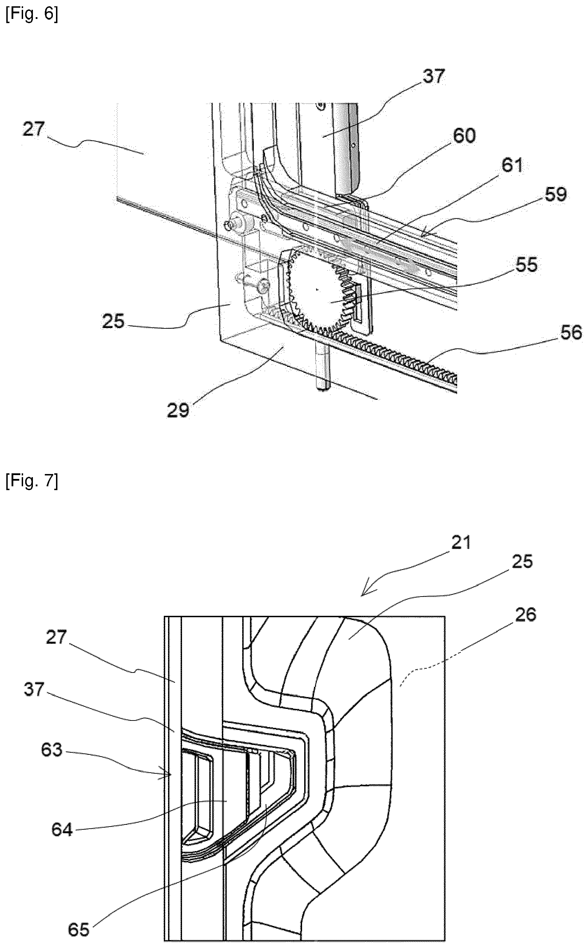

Comme cela est représenté sur la figure 6, la porte 27 pourra également comporter une roue dentée 55 en prise avec une crémaillère 56 fixée sur le châssis 25. La roue dentée 55 pourra être montée mobile en rotation par rapport à un montant structurel 37 de la porte mobile 27.

Afin d'optimiser le guidage de la porte 27 par rapport au châssis 25, il est possible de prévoir une liaison glissière 59 interposée entre la porte 27 et le châssis 25. La liaison glissière 59 est formée par au moins un patin 60 fixé sur la porte 27, notamment sur un montant structurel 37 de la porte 27, coopérant avec un rail 61 fixé sur le châssis 25. En variante, la structure pourra bien entendue être inversée, c'est-à-dire que le rail 61 pourra être fixé sur la porte 27 tandis que le ou les patins 60 pourront être fixés sur le châssis 25.

Suivant un mode de réalisation particulier représenté sur la figure 3, le dispositif de fermeture amovible 21 comporte deux systèmes de rappel 38 et deux liaisons glissières 59 disposés en partie haute et basse du châssis 25. En variante, il est possible de prévoir un seul système de rappel 38 et/ou une seule liaison glissière 59.

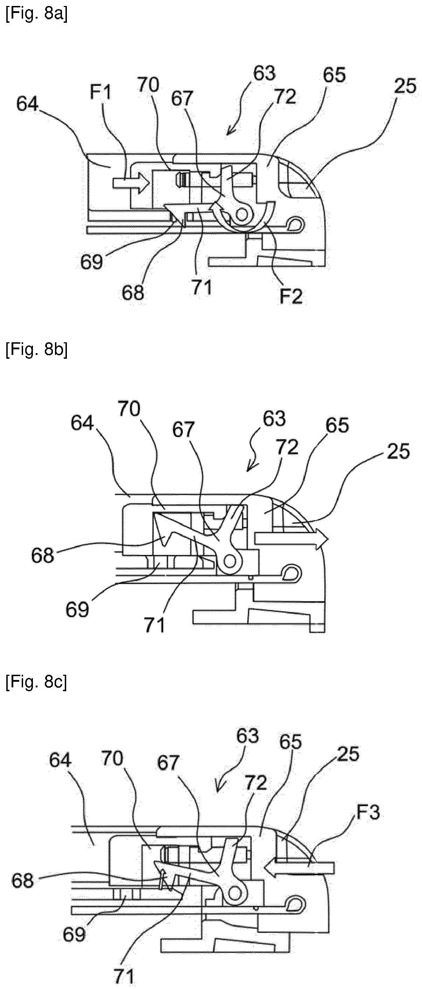

Avantageusement, comme cela est représenté sur les figures 7, 8a, 8b, et 8c, on prévoit un dispositif 63 de verrouillage et de déverrouillage de la porte mobile 27 en position stockée. Le dispositif 63 de verrouillage et de déverrouillage comporte une poignée 64 destinée à coopérer avec une contreforme 65 ménagée dans le châssis 25.

A cet effet, un loquet 67 rotatif est muni d'une portion en saillie 68 destinée à venir s'insérer à l'intérieur d'un logement 69 correspondant ménagé dans la porte 27 lorsque le dispositif 63 se trouve dans un état verrouillé. La poignée 64 comporte un bouton 70 apte à faire basculer le loquet 67 de façon à désengager la portion en saillie 68 du logement 26 lorsque le dispositif 63 se trouve dans un état déverrouillé.

Dans l'exemple représenté, le loquet 67 présente une patte 71 comportant la portion en saillie 68 et une patte de butée 72 de façon à présenter une forme en L.

Comme cela est représenté sur la figure 8a, le bouton 70 est mobile en translation de façon à pousser la patte de butée 72 suivant la flèche F1. Cela entraîne une rotation du loquet 67 autour de son axe suivant la flèche F2.

Comme cela est représenté sur la figure 8b, suite au déplacement du bouton 70, le loquet 67 est désengagé du logement 69.

Comme cela est représenté sur la figure 8c, le relâchement du bouton 70 entraîne son retour dans une position de repos suivant la flèche F3. La porte 27 est alors déverrouillée et peut être déplacée vers sa position déployée.

L'axe du loquet 67 est de préférence monté sur ressort de sorte que le verrouillage de la porte 27 s'effectue de façon automatique lorsque cette dernière repasse en position stockée.

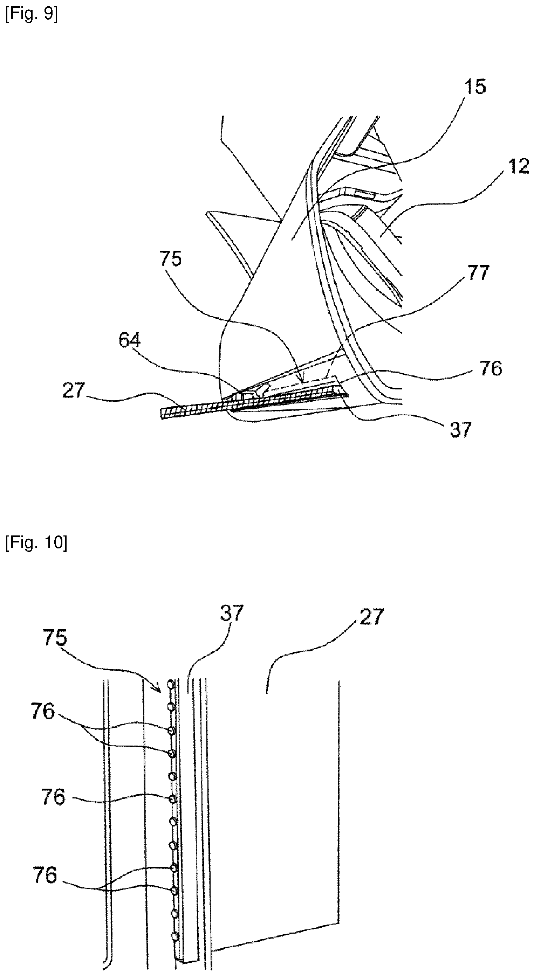

Comme cela est illustré par les figures 9 et 10, le dispositif de fermeture amovible 21 pourra également comporter un dispositif de maintien 75 de la porte 27 en position déployée. Le dispositif de maintien 75 est de préférence de type magnétique.

A cet effet, des aimants 76 sont disposés sur un montant structurel 37 de la porte 27, en particulier le montant d'extrémité avant 37, et/ou sur la poignée 64. Ces aimants 76 sont destinés à coopérer avec des éléments magnétiques 77 intégrés à une paroi correspondante d'une unité de siège 10 située devant le châssis 25. La paroi de l'unité de siège avant 10, notamment une paroi de la coque d'intimité 15, pourra ainsi intégrer des aimants ou des portions métalliques générant une attraction magnétique des aimants 76 de la porte mobile 27.

Par ailleurs, comme cela est illustré par les figures 1a et 1b, le châssis 25 pourra comporter une cavité 78 ménagée dans un panneau 34 de façon à augmenter un espace de vie au niveau des épaules d'un passager.

On décrit ci-après, en référence avec les figures 1a et 1b, l'utilisation du dispositif de fermeture 21 selon l'invention initialement en position stockée.

Lorsque le passager souhaite de l'intimité, il peut actionner le bouton de la poignée 64 afin de désengager le loquet 67 de son logement 26 pour déverrouiller la porte 27. Le passager tire ensuite sur la poignée 64 afin de faire passer par coulissement la porte 27 en position déployée. Lors de ce déplacement, la lame ressort 44 du système de rappel 38 emmagasine de l'énergie mécanique par enroulement de la lame ressort 44 autour de la bobine à câble 40 et déroulement au moins partiel de la lame ressort 44 par rapport à la bobine à ressort 43. La porte 27 est maintenue en position déployée par collage magnétique du montant structurel avant 37 sur une portion de l'unité de siège 10 avant.

Lorsque le passager souhaite libérer le passage 22 pour accéder au couloir de circulation 23 de l'avion, il tire la poignée 64 de façon à écarter le montant structurel avant 37 par rapport à l'unité de siège 10 avant. La lame ressort 44 du système de rappel 38 restitue alors l'énergie mécanique emmagasinée pour faire repasser automatiquement la porte 27 en position stockée, par déroulement de la lame ressort 44 de la bobine à câble 40 et enroulement de la lame ressort 44 autour de la bobine à ressort 43.

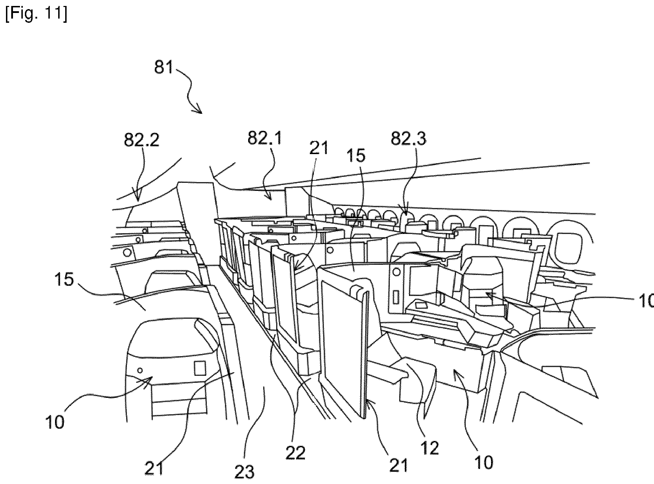

La figure 11 montre une cabine d'avion 81 comportant une pluralité d'unités de sièges 10 disposées les unes derrière les autres sous forme de colonnes 82.1, 82.2, et 82.3.

La cabine d'avion 81 pourra par exemple comporter une colonne centrale 82.1 et deux colonnes latérales 82.2, 82.3 disposées de part et d'autre de la colonne centrale 82.1. La colonne centrale 82.1, pourra être constituée d'une pluralité d'ensembles de deux unités de sièges 10 adjacentes disposés les uns derrière les autres. Une colonne latérale 82.2, 82.3 pourra être constituée d'une pluralité d'unités de sièges 10 individuelles disposées les unes derrière les autres.

Une colonne latérale 82.2, 82.3 est séparée de la colonne centrale 82.1 par l'intermédiaire d'un couloir de circulation 23.

Les unités de sièges 10 comportent chacune un dispositif de fermeture amovible 21 apte à sélectivement obturer ou laisser libre leur passage d'accès 22 au couloir de circulation 23. Ce passage d'accès 22 s'étend entre la coque d'intimité d'une unité de siège 10 donnée et la coque d'intimité de l'unité de siège 10 avant dans une colonne donnée 82.1, 82.2, 82.3.

Bien entendu, le nombre de colonnes de sièges 82.1, 82.2, 82.3 pourra être adapté en fonction de la configuration de la cabine d'avion 81.

En variante, le dispositif de fermeture amovible 21 pourra être disposé entre deux unités de sièges 10 adjacentes, par exemple deux unités de sièges 10 de la colonne centrale 82.1.

Bien entendu, les différentes caractéristiques, variantes et/ou formes de réalisation de la présente invention peuvent être associées les unes avec les autres selon diverses combinaisons dans la mesure où elles entrent dans le champ des revendications annexées.

En outre, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre de la présente invention et notamment toutes combinaisons des différents modes de fonctionnement décrits précédemment, pouvant être pris séparément ou en association, dans la mesure où elles entrent dans le cadre des revendications annexées.

## Revendications

1. Unité de siège (10)**,** notamment pour une cabine d'avion, comportant un dispositif de fermeture amovible (21) d'un espace (22) comportant:
- un châssis (25) comportant un logement (26), et
- une porte mobile (27) apte à se déplacer en translation par rapport au châssis (25) entre une position stockée dans laquelle la porte mobile (27) est située majoritairement à l'intérieur du logement (26) et une position déployée dans laquelle la porte mobile (27) est située majoritairement à l'extérieur du logement (26), le dispositif de fermeture amovible (21) comportant en outre un système de rappel (38) comportant une bobine à câble (40) autour de laquelle est enroulé un câble (41), ledit câble (41) étant relié par une de ses extrémités à la porte mobile (27), et
- un système à ressort (42) configuré pour emmagasiner une énergie mécanique lorsque le câble (41) est dans un état déroulé suite à un déplacement de porte (27) vers la position déployée, et
- pour libérer cette énergie mécanique de façon à faire repasser automatiquement la porte mobile (27) de la position déployée vers la position stockée suite à un relâchement de la porte mobile (27),
**caractérisée en ce que**:
- le système à ressort (42) comporte une bobine à ressort (43) autour de laquelle est enroulée au moins en partie une lame ressort (44),
- ladite lame ressort (44) est également reliée à la bobine à câble (40),
- ladite bobine à câble (40) comporte une portion autour de laquelle le câble (41) est enroulé et une portion axialement adjacente autour de laquelle une portion de la lame ressort (44) peut être enroulée lors d'un stockage d'énergie mécanique.

2. Unité de siège selon la revendication 1, **caractérisée en ce que** la bobine à câble (40) est liée en rotation avec un pignon (51) engrenant avec un pignon réducteur (52).

3. Unité de siège selon la revendication 2, **caractérisée en ce que** le pignon réducteur (52) est accouplé avec un pignon amortisseur (53) pour contrôler une vitesse de retour de la porte mobile (27) en position stockée.

4. Unité de siège selon l'une quelconque des revendications 1 à 3, **caractérisée en ce que** la porte mobile (27) comporte une roue dentée en prise avec une crémaillère fixée sur le châssis (25).

5. Unité de siège selon l'une quelconque des revendications 1 à 4, **caractérisée en ce que** le dispositif de fermeture amovible comporte un dispositif (63) de verrouillage et de déverrouillage de la porte mobile (27) en position stockée.

6. Unité de siège selon la revendication 5, **caractérisée en ce que** le dispositif (63) de verrouillage et de déverrouillage comporte une poignée (64) destinée à coopérer avec une contreforme (65) ménagée dans le châssis (25).

7. Unité de siège selon la revendication 6, **caractérisée en ce que** le dispositif (63) de verrouillage et de déverrouillage comporte un loquet rotatif (67) muni d'une portion en saillie (68), ladite portion en saillie (68) étant destinée à venir s'insérer à l'intérieur d'un logement (26) correspondant ménagé dans la poignée (64) lorsque le dispositif (63) est dans un état verrouillé.

8. Unité de siège selon l'une quelconque des revendications 1 à 7, **caractérisée en ce que** le dispositif de fermeture amovible comporte un dispositif de maintien (75) de la porte (27) en position déployée.

9. Unité de siège selon l'une quelconque des revendications 1 à 8, **caractérisée en ce que** le châssis (25) comporte une cavité (78) ménagée dans un panneau de façon à augmenter un espace de vie au niveau des épaules d'un passager.

10. Unité de siège selon l'une quelconque des revendications 1 à 9, **caractérisée en ce que** la porte mobile (27) comporte un panneau (34) réalisé dans un matériau souple et deux panneaux de finition (35) disposés de part et d'autre du panneau souple (34).

11. Cabine d'avion (81) comportant un couloir de circulation (23), au moins une unité de siège (10) telle que définie selon l'une quelconque des revendications 1 à 10 apte à sélectivement obturer ou laisser libre un passage d'accès (22) au couloir de circulation (23).

## Patentansprüche

1. Sitzeinheit (10), insbesondere für eine Flugzeugkabine, mit einer abnehmbaren Verschlussvorrichtung (21) für einen Raum (22), umfassend:
- einen Rahmen (25), der eine Aufnahme (26) umfasst, und
- eine bewegliche Tür (27), die sich relativ zum Rahmen (25) zwischen einer verstauten Position, in der sich die bewegliche Tür (27) hauptsächlich innerhalb der Aufnahme (26) befindet, und einer Einsatzposition, in der sich die bewegliche Tür (27) hauptsächlich außerhalb der Aufnahme (26) befindet, eine Translationsbewegung durchführen kann,
wobei die abnehmbare Verschlussvorrichtung (21) ferner ein Rückführsystem (38) mit einer Kabelrolle (40), um die ein Kabel (41) gewickelt ist, wobei das Kabel (41) über einen seiner Enden mit der beweglichen Tür (27) verbunden ist, und
- ein Federsystem (42), das dazu konfiguriert ist, mechanische Energie zu speichern, wenn sich das Kabel (41) aufgrund einer Bewegung der Tür (27) in Richtung der ausgefahrenen Position in einem abgewickelten Zustand befindet, und
- diese mechanische Energie freizugeben, um die bewegliche Tür (27) aufgrund einer Freigabe der beweglichen Tür (27) automatisch aus der ausgefahrenen Position in die verstaute Position zurückzuführen, umfasst,
**dadurch gekennzeichnet, dass**:
- das Federsystem (42) aus einer Federwendel (43), um die zumindest teilweise ein Federblatt (44) gewickelt ist, besteht,
- das Federblatt (44) auch mit der Kabelrolle (40) verbunden ist,
- die Kabelrolle (40) einen Abschnitt, um den das Kabel (41) gewickelt ist, und einen axial angrenzenden Abschnitt, um den ein Abschnitt des Federblatts (44) während der Speicherung mechanischer Energie gewickelt werden kann, aufweist.

2. Sitzeinheit nach Anspruch 1, **dadurch gekennzeichnet, dass** die Kabelrolle (40) drehfest mit einem mit einem Untersetzungsritzel (52) kämmenden Ritzel (51) verbunden ist.

3. Sitzeinheit nach Anspruch 2, **dadurch gekennzeichnet, dass** das Untersetzungsritzel (52) mit einem Dämpfungsritzel (53) gekoppelt ist, um eine Rücklaufgeschwindigkeit der beweglichen Tür (27) in die verstaute Position zu steuern.

4. Sitzeinheit nach einem der Ansprüche 1 bis 3, **dadurch gekennzeichnet, dass** die bewegliche Tür (27) ein mit einer am Rahmen (25) befestigten Zahnstange kämmendes Zahnrad umfasst.

5. Sitzeinheit nach einem der Ansprüche 1 bis 4, **dadurch gekennzeichnet, dass** die abnehmbare Verschlussvorrichtung eine Verriegelungs- und Entriegelungsvorrichtung (63) für die bewegliche Tür (27) in der verstauten Position umfasst.

6. Sitzeinheit nach Anspruch 5, **dadurch gekennzeichnet, dass** die Verriegelungs- und Entriegelungsvorrichtung (63) einen Griff (64) zum Zusammenwirken mit einer Gegenform (65) im Rahmen (25) umfasst.

7. Sitzeinheit nach Anspruch 6, **dadurch gekennzeichnet, dass** die Verriegelungs- und Entriegelungsvorrichtung (63) einen Drehriegel (67) mit einem vorspringenden Abschnitt (68) umfasst, wobei sich der vorspringende Abschnitt (68) in eine entsprechende Aufnahme (26) im Griff (64) einfügen soll, wenn sich die Vorrichtung (63) in einem verriegelten Zustand befindet.

8. Sitzeinheit nach einem der Ansprüche 1 bis 7, **dadurch gekennzeichnet, dass** die abnehmbare Verschlussvorrichtung eine Haltevorrichtung (75) für die Tür (27) in der ausgefahrenen Position umfasst.

9. Sitzeinheit nach einem der Ansprüche 1 bis 8, **dadurch gekennzeichnet, dass** der Rahmen (25) einen Hohlraum (78) in einer Platte aufweist, um den Wohnraum im Schulterbereich eines Passagiers zu vergrößern.

10. Sitzeinheit nach einem der Ansprüche 1 bis 9, **dadurch gekennzeichnet, dass** die bewegliche Tür (27) eine Platte (34) aus flexiblem Material und zwei, auf beiden Seiten der flexiblen Platte (34) angeordneten Abschlussplatten (35), umfasst.

11. Flugzeugkabine (81) mit einem Gang (23), mindestens einer Sitzeinheit (10) gemäß einem der Ansprüche 1 bis 10, die einen Zugangsweg (22) zum Gang (23) wahlweise verschließen oder freihalten kann.

## Claims

1. A seat unit (10), notably for an aircraft cabin, comprising a removable closing device (21) for a space (22) comprising:
- a frame (25) comprising a housing (26), and
- a movable door (27) capable of moving in translation relative to the frame (25) between a stored position in which the movable door (27) is located mainly inside the housing (26) and a deployed position in which the movable door (27) is located mainly outside the housing (26),
the removable closing device (21) further comprising a return system (38) comprising a cable reel (40) around which a cable (41) is wound, said cable (41) being connected by one of its ends to the movable door (27), and
- a spring system (42) configured to store mechanical energy when the cable (41) is in an unwound state due to a movement of the door (27) towards the deployed position, and
- to release this mechanical energy so as to automatically return the movable door (27) from the deployed position to the stored position due to a release of the movable door (27),
**characterized in that**:
- the spring system (42) comprises a spring coil (43) around which a spring blade (44) is wound at least in part,
- said spring blade (44) is also connected to the cable reel (40),
- said cable reel (40) comprises a portion around which the cable (41) is wound and an axially adjacent portion around which a portion of the spring blade (44) can be wound during storage of mechanical energy.

2. The seat unit according to claim 1, **characterized in that** the cable reel (40) is rotatably connected to a pinion (51) meshing with a reduction pinion (52).

3. The seat unit according to claim 2, **characterized in that** the reduction pinion (52) is coupled with a damping pinion (53) to control a return speed of the movable door (27) into the stored position.

4. The seat unit according to any one of the claims 1 to 3, **characterized in that** the movable door (27) comprises a toothed wheel meshed with a rack fixed on the frame (25).

5. The seat unit according to any one of the claims 1 to 4, **characterized in that** the removable closing device comprises a locking and unlocking device (63) for the movable door (27) in the stored position.

6. The seat unit according to claim 5, **characterized in that** the locking and unlocking device (63) comprises a handle (64) for cooperating with a counterform (65) in the frame (25).

7. The seat unit according to claim 6, **characterized in that** the locking and unlocking device (63) comprises a rotary latch (67) provided with a projecting portion (68), said projecting portion (68) being intended to be inserted inside a corresponding housing (26) in the handle (64) when the device (63) is in a locked state.

8. The seat unit according to any one of the claims 1 to 7, **characterized in that** the removable closing device comprises a holding device (75) for the door (27) in the deployed position.

9. The seat unit according to any one of the claims 1 to 8, **characterized in that** the frame (25) comprises a cavity (78) in a panel for increasing a living space at the shoulders of a passenger.

10. The seat unit according to any one of the claims 1 to 9, **characterized in that** the movable door (27) comprises a panel (34) made of a flexible material and two finishing panels (35) arranged on either side of the flexible panel (34).

11. An aircraft cabin (81) comprising an aisle (23), at least one seat unit (10) as defined according to any one of the claims 1 to 10 capable of selectively closing or keeping clear an access passage (22) to the aisle (23).
